# EUROPÄISCHE PATENTSCHRIFT

(11) **EP 1 320 502 B1**
(45) Veröffentlichungstag und Bekanntmachung des Hinweises auf die Patenterteilung: **09.06.2004**
(21) Anmeldenummer: 01978169.9
(22) Anmeldetag: 20.09.2001
(51) Int. Cl.: B65G 47/84, F16H 55/24

(54) **ZUFÜHREINRICHTUNG FÜR MIT BESTÜCKELEMENTEN BELADENE TRANSPORTBÄNDER**
FEED DEVICE FOR CONVEYOR BELTS LOADED WITH PICK-AND-PLACE COMPONENTS
DISPOSITIF D'ALIMENTATION POUR CONVOYEURS A COURROIES TRANSPORTANT DES COMPOSANTS ELECTRONIQUES

(30) Priorität: 29.09.2000 DE 10048458
(43) Veröffentlichungstag der Anmeldung: 25.06.2003
(73) Patentinhaber: SIEMENS AKTIENGESELLSCHAFT, 80333 München (DE)
(72) Erfinder: BAUMEISTER, Andre, 59387 Ascheberg (DE); LIEBEKE, Thomas, 85521 Ottobrunn (DE); WALLNER, Herbert, 71101 Schönaich (DE)
(86) Internationale Anmeldenummer: PCT/DE2001/003640
(87) Internationale Veröffentlichungsnummer: WO 2002/026600

(56) Entgegenhaltungen:
- US-A- 3 538 675

## Beschreibung

Die Erfindung betrifft eine Zuführeinrichtung für mit Bestükkelementen beladene Transportbänder mit mindestens einem Transportrad und einer mit diesem gekoppelten Antriebseinrichtung.

Elektronische Bauelemente werden beispielsweise auf Transportbändern angeordnet bereitgestellt. Die Transportbänder sind herkömmlicherweise mit einer Deckschicht versehen, von welcher verhindert wird, dass die Bauelemente von dem Transportband abfallen. Um die an dem Transportband angeordneten Bauelemente beispielsweise auf eine Leiterplatte bestücken zu können, muss die Deckschicht entfernt werden, wodurch die Bauelemente sukzessive freigelegt werden, um mittels einer Handhabungseinrichtung, wie beispielsweise einem Bestückkopf einer Bestückvorrichtung aus dem Transportband entnommen und auf eine Leiterplatte gesetzt werden zu können.

Da die Bauelemente immer kleiner werden und bereits heute sehr geringe Abmessungen aufweisen, ist es erforderlich, das Transportband mit den darauf angeordneten Bauelementen entsprechend genau zu positionieren. Hierzu wurden bisher Zuführeinrichtungen verwendet, welche beispielsweise das Transportband zunächst unter Abziehen der Deckschicht und Freilegen der Bauelemente vorwärts transportierten und anschließend das Transportband mittels eines mechanischen Anschlags genau positionierten, gegen welchen die Antriebseinrichtung das Transportrad oder die zum Koppeln der Antriebseinrichtung mit dem Transportrad verwendete Mechanik bewegt hatte. Hierbei kommt es jedoch zu ruckartigen Bewegungen des Transportbandes, wodurch die Bauelemente von dem Transportband abfallen können, ehe sie von dem Bestückkopf der Bestückvorrichtung aus dem Transportband entnommen werden können.

Um das Abfallen der Bauelemente von dem Transportband zu verhindern, wurden Niederhaltevorrichtungen für die Bauelemente eingesetzt, welche die Bauelemente in den Taschen des Transportbandes solange hielten, bis die Bauelemente mittels eines Bestückkopfes entnommen waren. Die Niederhaltevorrichtungen bedeuten jedoch einen hohen mechanischen Aufwand, sind anfällig für Defekte, und verlangsamen den Zuführzyklus der Bestückelemente. Ferner sind bei herkömmlichen Zuführeinrichtungen die ruckartigen Bewegungen des Transportbandes unerwünscht, da trotz der Niederhaltevorrichtungen Bestückelemente von dem Transportband abfallen können.

Es besteht daher der Bedarf an einer Zuführeinrichtung, mittels welcher ein genaues Positionieren und Zuführen von mit Bestückelementen beladenen Transportbändern einfach und sicher möglich ist.

Diese Aufgabe wird gelöst durch die Vorrichtung nach dem unabhängigen Anspruch. Bevorzugte Ausgestaltungen der Erfindung sind in den abhängigen Ansprüchen beansprucht.

Erfindungsgemäß wird eine Zuführeinrichtung für mit Bestückelemente beladene Transportbänder geschaffen, welche mindestens ein Transportrad und eine mit diesem gekoppelte Antriebseinrichtung aufweist. Das Transportrad ist zum Bewegen des Transportbandes mit diesem koppelbar. Ferner ist an dem Transportrad ein Steuergetriebe vorgesehen, dessen Antriebsund Abtriebsachse sich kreuzen. Hierdurch wird erreicht, dass das Steuergetriebe selbsthemmend ist, so dass mittels des Steuergetriebes die Bewegung der Antriebseinrichtung und damit die Bewegung des Transportrades, welches das Transportband antreibt, gesteuert werden kann.

Das Steuergetriebe kann beispielsweise ein Schneckengetriebe oder ein Schraubradgetriebe sein. Ein derartiges Schneckengetriebe kann ein an dem Transportrad ausgebildetes Schneckenrad, durch welches hindurch die Abtriebsachse verläuft, und eine Steuerspindel aufweisen, welche in das Schneckenrad eingreift und durch welche hindurch die Antriebsachse verläuft.

Ferner kann eine Steuervorrichtung vorgesehen sein, mittels welcher die Bewegung des von der Antriebseinrichtung angetriebenen Transportrades mittels des Steuergetriebes steuerbar ist. Die Steuervorrichtung kann einen mit dem Steuergetriebe gekoppelten Steuerantrieb aufweisen, von welchem über eine Steuerachse Leistung aufnehmbar oder Leistung abgebbar ist.

Der Steuerantrieb kann ein Elektroantrieb sein. Hierdurch ist es möglich, mittels einer elektronischen Steuervorrichtung geeignete Steuerverfahren zum Steuern der Bewegung des Transportrades einzusetzen.

Die Steuerachse des Steuerantriebs kann mit der Antriebsachse des Steuergetriebes zusammenfallen. Beispielsweise kann die Steuerachse des Steuerantriebs direkt mit der Steuerspindel des Steuergetriebes verbunden sein. Dies ermöglicht einen geringen Raumbedarf des Steuerantriebs und des Steuergetriebes.

Ferner kann die Antriebseinrichtung des Transportrades über eine Antriebsspindel mit dem Transportrad gekoppelt sein, welche zusätzlich zu der Steuerspindel in das Schneckenrad des Steuergetriebes eingreift. Hierdurch wird eine weitere Baugrößenreduzierung ermöglicht.

Mittels der Steuervorrichtung kann die Drehzahl und/oder die Leistung des Steuerantriebs in Abhängigkeit von der Drehzahl und/oder der Leistung der Antriebseinrichtung steuerbar sein.

Der Steuerantrieb kann ferner mittels der Steuervorrichtung als Antrieb des Transportrads steuerbar sein. Hierdurch ist es möglich, sowohl mit der Antriebseinrichtung des Transportrades als auch mit der Steuervorrichtung über das Steuergetriebe das Transportrad anzutreiben. Dabei sind höhere Leistungsabgaben an das Transportrad und somit ein schnellerer Transport des Transportbandes möglich, als bei Antreiben des Transportrades lediglich mit der Antriebseinheit.

Das Transportrad kann zum Erfassen seiner Position mit einem Enkoder versehen sein und die Zuführeinrichtung kann einen Sensor aufweisen, von welchem der Enkoder abtastbar ist.

Bevorzugt sind die Antriebseinrichtung und der Steuerantrieb gleichartig ausgebildet. Hierdurch wird der Aufbau der erfindungsgemäßen Zuführeinrichtung sowie dessen Konstruktion und Entwicklung vereinfacht und vergünstigt.

Die Erfindung wird unter Bezugnahme auf die Zeichnung näher erläutert. In der Zeichnung zeigen:
Figur 1 eine schematische Draufsicht auf eine bevorzugte Ausführungsform der Erfindung und
Figur 2 ein Diagramm, aus welchem der Verlauf der an eine Antriebseinrichtung und einen Steuerantrieb der bevorzugten Ausführungsform der Erfindung angelegten Spannung in Abhängigkeit von der Drehzahl ersichtlich ist.

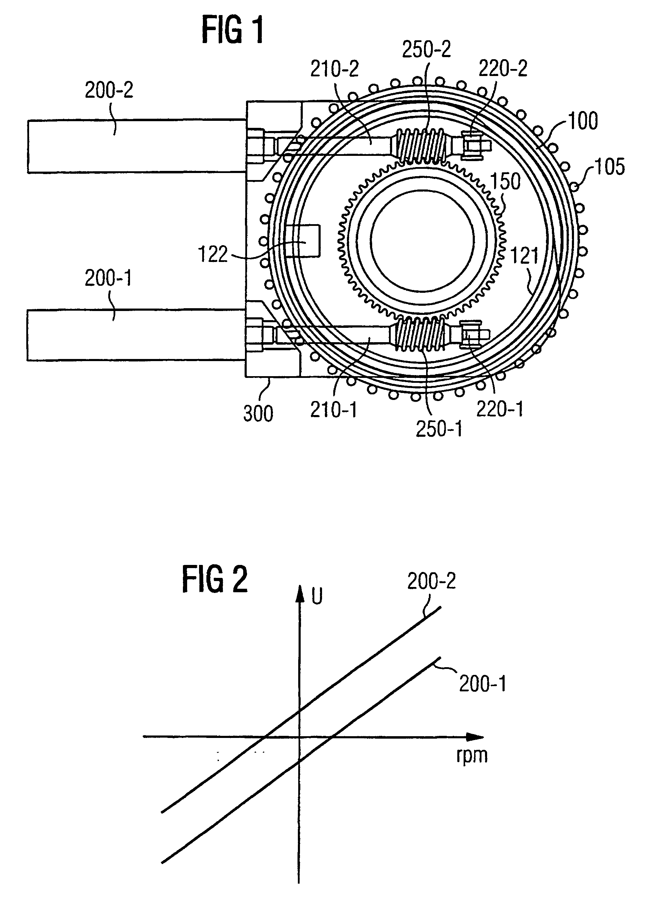

Wie aus Figur 1 ersichtlich, weist die bevorzugte Ausführungsform der Erfindung ein Transportrad 100, einen Steuerantrieb 200-1 und eine Antriebseinrichtung 200-2 auf. An einer Grundplatte 300 sind die Antriebseinrichtung 200-2, der Steuerantrieb 200-1 sowie das Transportrad 100 angeordnet. Das Transportrad 100 weist eine Mehrzahl von Transportstacheln 105 auf, welche am Umfang des Transportrades 100 verteilt ausgebildet sind und zum Eingreifen in Transportöffnungen dienen, welche in dem Transportband ausgebildet sind, das mittels der erfindungsgemäßen Zuführeinrichtung transportierbar ist.

Das Transportrad 100 ist ferner mit einem Schneckenrad 150 versehen. In das Schneckenrad 150 greifen eine Steuerspindel 250-1 und eine Antriebsspindel 250-2 ein. Die Steuerspindel 250-1 ist über eine Steuerachse 210-1 mit dem Steuerantrieb 200-1 verbunden.

An der Grundplatte 300 ist ein Lager 220-1 für die Steuerachse 210-1 vorgesehen. Die Antriebsspindel 250-2 ist über eine Antriebsachse 210-2 mit der Antriebseinrichtung 200-2 verbunden. An der Grundplatte 300 ist eine Lagervorrichtung 220-2 für die Antriebsachse 210-2 vorgesehen.

Durch den gleichzeitigen Eingriff der Steuerspindel 250-1 und der Antriebsspindel 250-2 in das Schneckenrad 150 ist es möglich, die Zuführeinrichtung nach der Erfindung in axialer Richtung mit sehr geringen Abmessungen auszubilden. Dadurch ist die erfindungsgemäße Zuführeinrichtung insbesondere für schmale Transportbänder geeignet.

Der Steuerantrieb 200-1 und die Antriebseinrichtung 200-2 können beispielsweise gleichartig ausgebildet sein, so dass bei Bedarf der Steuerantrieb 200-1 zusätzlich zu der Antriebseinrichtung 200-2 zum Antreiben des Transportrades 100 verwendet werden kann.

Aus der Figur 2 ist ein Diagramm eines beispielhaften Verlaufs der Spannungen ersichtlich, welche an den Steuerantrieb 200-1 bzw. an die Antriebseinrichtung 200-2 in Abhängigkeit von der Drehzahl angelegt werden. Wie aus der Figur 2 ersichtlich, ist der Betrag jener Spannung, welche an die Antriebseinrichtung 200-2 angelegt wird, um eine konstante Differenz höher als der Betrag der Spannung, welche an den Steuerantrieb 200-1 angelegt wird.

Hierdurch wird erreicht, dass während des Antreibens des Transportrades 100 das Antreiben über die Antriebseinrichtung 200-2, die Antriebsachse 210-2, die Antriebsspindel 250-2 und das Schneckenrad 150 spielfrei erfolgt, da die Antriebseinrichtung 200-2 mit mehr Energie versorgt wird als der Steuerantrieb 200-1, wodurch eventuell vorhandenes Spiel zwischen der Antriebsspindel 250-2 und dem Schneckenrad 150 bzw. der Steuerspindel 250-1 und dem Schneckenrad ausgeglichen wird.

Es ist jedoch auch möglich, eine andere Relation der Leistung und/oder der Drehzahl des Steuerantriebs zu der Leistung und/oder der Drehzahl der Antriebseinrichtung 200-2 zu verwenden. Beispielsweise können der Steuerantrieb 200-1 und die Antriebseinrichtung 200-2 mit derselben Leistung versorgt bzw. derselben Drehzahl betrieben werden, so dass ein Antreiben des Transportrades 100 mit der doppelten Antriebsleistung möglich ist.

Im Übergang vom Antriebs-Betrieb auf einen Positionierbetrieb ist ein Umschalten in die vorgenannte unterschiedliche Versorgung von Antriebseinrichtung 200-2 und Steuerantrieb 200-1 möglich, so dass ein spielfreies Positionieren des Transportrades 100 und somit des Transportbandes, welches die Bauelemente aufnimmt, möglich ist.

Das Transportrad 100 kann mit einem Enkoder 121 versehen sein, beispielsweise mit einer Strichscheibe. Mittels eines Sensors 122 ist der Enkoder 121 abtastbar. Der Sensor 122 kann an die Steuervorrichtung angeschlossen sein, mittels welcher dann ein hochgenaues Positionieren des Transportrades 100 und damit eines mit diesem gekoppelten Transportbandes möglich ist. Ferner ist es durch den Enkoder 121 zusammen mit dem Sensor 122 und der Steuervorrichtung möglich die Bewegung des Transportrades 100 in einem geschlossenen Regelkreis hochgenau zu regeln.

## Patentansprüche

1. Zuführeinrichtung für mit Bestückelementen beladene Transportbänder mit
• mindestens einem Transportrad (100), welches zum Bewegen eines Transportbands mit dem Transportband koppelbar ist, und
• einer mit dem Transportrad (100) gekoppelten Antriebseinrichtung (200-2),
**dadurch gekennzeichnet, daß**
• ein Steuergetriebe (250-1, 150) an dem Transportrad (100) vorgesehen ist, das eine Antriebsachse und eine Abtriebsachse aufweist, welche sich kreuzen.

2. Zuführeinrichtung nach Anspruch 1, **dadurch gekennzeichnet, daß** das Steuergetriebe (250-1, 150) ein Schneckengetriebe ist, welches ein an dem Transportrad (100) ausgebildetes Schneckenrad (150), durch welches hindurch die Abtriebsachse verläuft, und eine Steuersspindel (250-1) aufweist, welche in das Schneckenrad (150) eingreift und durch welche hindurch die Antriebsachse verläuft.

3. Zuführeinrichtung nach Anspruch 1 oder 2, **dadurch gekennzeichnet, daß** die Bewegung des von der Antriebseinrichtung (200-2) angetriebenen Transportrads (100) von einer mit dem Steuergetriebe (250-1, 150) in Wirkverbindung stehenden Steuervorrichtung steuerbar ist.

4. Zuführeinrichtung nach Anspruch 3, wobei die Steuervorrichtung einen mit dem Steuergetriebe (250-1, 150) gekoppelten Steuerantrieb (200-1) aufweist, von welchem über eine Steuerachse (210-1) Leistung aufnehmbar oder abgebbar ist.

5. Zuführeinrichtung nach Anspruch 4, wobei der Steuerantrieb (200-1) ein Elektroantrieb ist.

6. Zuführeinrichtung nach einem der Ansprüche 4 oder 5, **dadurch gekennzeichnet, daß** die Steuerachse (210-1) des Steuerantriebs (200-1) mit der Antriebsachse des Steuergetriebes (250-1, 150) zusammenfällt.

7. Zuführeinrichtung nach einem der Ansprüche 1 bis 6, **dadurch gekennzeichnet, daß** die Antriebseinrichtung (200-2) über eine Antriebsspindel (250-1) mit dem Transportrad (100) gekoppelt ist, welche in das Schneckenrad (150) des Steuergetriebes (250-1, 150) eingreift.

8. Zuführeinrichtung nach einem der Ansprüche 3 bis 7, **dadurch gekennzeichnet, daß** von der Steuervorrichtung die Drehzahl und/oder die Leistung des Steuerantriebs (200-1) in Abhängigkeit von der Drehzahl und/oder der Leistung der Antriebseinrichtung (200-2) steuerbar ist.

9. Zuführeinrichtung nach Anspruch 8, **dadurch gekennzeichnet, daß** von der Steuervorrichtung der Steuerantrieb (200-1) als Antrieb des Transportrades (100) steuerbar ist.

10. Zuführeinrichtung nach einem der Ansprüche 1 bis 9, **dadurch gekennzeichnet, daß** das Transportrad (100) einen Enkoder (121) aufweist und die Zuführeinrichtung mit einem Sensor (122) zum Abtasten des Enkoders (121) versehen ist.

11. Zuführeinrichtung nach einem der Ansprüche 4 bis 10, wobei die Antriebseinrichtung (200-2) und der Steuerantrieb (200-1) gleichartig ausgebildet sind.

## Claims

1. Feed device for conveyor belts loaded with pick and place components having
• at least one transport wheel (100), which can be coupled to a conveyor belt in order to move the conveyor belt, and
• a drive device (200-2) coupled to the transport wheel (100),
**characterized in that**
• a control mechanism (250-1, 150) is provided on the transport wheel (100) and has an input shaft and an output shaft which cross.

2. Feed device according to Claim 1, **characterized in that** the control mechanism (250-1, 150) is a worm gear mechanism, which has a worm gear (150) which is formed on the transport wheel (100) and through which the output shaft runs, and a control spindle (250-1) which engages in the worm gear (150) and through which the input shaft runs.

3. Feed device according to Claim 1 or 2, **characterized in that** the movement of the transport wheel (100) driven by the drive device (200-2) can be controlled by a control apparatus that is operatively connected to the control mechanism (250-2, 150).

4. Feed device according to Claim 3, the control apparatus having a control drive (200-1) which is coupled to the control mechanism (250-1, 150) and from which power can be taken or power can be output via a control shaft (210-1).

5. Feed device according to Claim 4, the control drive (200-1) being an electric drive.

6. Feed device according to either of Claims 4 and 5, **characterized in that** the control shaft (210-1) of the control drive (200-1) coincides with the input shaft of the control mechanism (250-1, 150).

7. Feed device according to one of Claims 1 to 6, **characterized in that** the drive device (200-2) is coupled to the transport wheel (100) via a drive spindle (250-1) which engages in the worm gear (150) of the control drive (250-1, 150).

8. Feed device according to one of Claims 3 to 7, **characterized in that** the control apparatus is able to control the rotational speed and/or the power of the control drive (200-1) as a function of the rotational speed and/or the power of the drive device (200-2).

9. Feed device according to Claim 8, **characterized in that** the control apparatus is able to control the control drive (200-1) as the drive of the transport wheel (100).

10. Feed device according to one of Claims 1 to 9, **characterized in that** the transport wheel (100) has an encoder (121) and the feed device is provided with a sensor (122) for sensing the encoder (121).

11. Feed device according to one of Claims 4 to 10, the drive device (200-2) and the control drive (200-1) being constructed identically.

## Revendications

1. Dispositif d'alimentation pour bandes convoyeuses chargées de composants électroniques et ayant
• au moins un rouleau convoyeur (100), qui, pour le déplacement d'une bande convoyeuse, peut être couplé à la bande convoyeuse, et
• un dispositif d'entraînement (200-2) couplé au rouleau convoyeur (100),
**caractérisé par le fait**
• **qu'**il est prévu, sur le rouleau convoyeur (100), un engrenage de commande (250-1, 150), qui a un axe d'entraînement et un axe de sortie qui se croisent.

2. Dispositif d'alimentation selon la revendication 1 **caractérisé par le fait que** l'engrenage de commande (250-1, 150) est un engrenage à vis sans fin comportant une roue hélicoïdale (150) solidaire du rouleau convoyeur (100), à travers laquelle passe l'axe de sortie, et une vis sans fin de commande (250-1), qui s'engage dans la roue hélicoïdale (150) et à travers laquelle passe l'axe d'entraînement.

3. Dispositif d'alimentation selon la revendication 1 ou 2 **caractérisé par le fait que** le mouvement du rouleau convoyeur (100) entraîné par le dispositif d'entraînement (200-2) peut être contrôlé par un dispositif de commande qui se trouve en interaction avec l'engrenage de commande (250-1, 150).

4. Dispositif d'alimentation selon la revendication 3, le dispositif de commande comportant, couplé à l'engrenage de commande (250-1, 150), un entraînement de commande (200-1) qui, par l'intermédiaire d'un axe de commande (210-1), peut absorber ou transmettre de la puissance.

5. Dispositif d'alimentation selon la revendication 4, l'entraînement de commande (200-1) étant un entraînement électrique.

6. Dispositif d'alimentation selon l'une des revendications 4 ou 5 **caractérisé par le fait que** l'axe de commande (210-1) de l'entraînement de commande (200-1) est identique à l'axe d'entraînement de l'engrenage de commande (250-1, 150).

7. Dispositif d'alimentation selon l'une des revendications 1 à 6 **caractérisé par le fait que** le dispositif d'entraînement (200-2) est couplé, par l'intermédiaire d'une vis sans fin d'entraînement (250-1) au rouleau convoyeur (100), qui s'engage dans la roue hélicoïdale (150) de l'engrenage de commande (250-1, 150).

8. Dispositif d'alimentation selon l'une des revendications 3 à 7 **caractérisé par le fait que** le dispositif de commande peut contrôler la vitesse de rotation et/ou la puissance de l'entraînement de commande (200-1) en fonction de la vitesse de rotation et/ou de la puissance du dispositif d'entraînement (200-2).

9. Dispositif d'alimentation selon la revendication 8 **caractérisé par le fait que** le dispositif de commande peut contrôler l'entraînement de commande (200-1) en tant qu'entraînement du rouleau convoyeur (100).

10. Dispositif d'alimentation selon l'une des revendications 1 à 9 **caractérisé par le fait que** le rouleau convoyeur (100) comporte un codeur (121) et que le dispositif d'alimentation est muni d'un capteur (122) destiné à interroger le codeur (121).

11. Dispositif d'alimentation selon l'une des revendications 4 à 10 dans lequel le dispositif d'entraînement (200-2) et l'entraînement de commande (200-1) sont conçus d'une façon identique.
